# EUROPÄISCHE PATENTSCHRIFT

(11) **EP 1 995 566 B1**
(45) Veröffentlichungstag und Bekanntmachung des Hinweises auf die Patenterteilung: **08.05.2013**
(21) Anmeldenummer: 08002233.8
(22) Anmeldetag: 07.02.2008
(51) Int. Cl.: G01D 5/245, G01D 5/36

(54) **Maßstab für eine Positionsmesseinrichtung und Positionsmesseinrichtung**
Measuring rod for a positioning system and positioning system
Echelle pour un dispositif de mesure de position et dispositif de mesure de position

(30) Priorität: 25.05.2007 DE 102007024593
(43) Veröffentlichungstag der Anmeldung: 26.11.2008
(73) Patentinhaber: Dr. Johannes Heidenhain GmbH, 83301 Traunreut (DE)
(72) Erfinder: Tovar, Heinz, 83313 Siegsdorf (DE)

(56) Entgegenhaltungen:
- EP-A2- 1 400 778
- DE-A1- 10 118 174
- US-B2- 6 995 840

## Beschreibung

Die Erfindung betrifft einen Maßstab für eine Positionsmesseinrichtung sowie eine Positionsmesseinrichtung mit einem solchen Maßstab.

Positionsmesseinrichtungen oder Positionsmessgeräte für Längen- oder Winkelmessungen basierend auf Maßstäben mit hochgenauen periodischen Teilungsspuren sind bekannt. Sie werden eingesetzt, um in Maschinen aller Art bewegliche Achsen mittels eines Antriebs zu positionieren. Beispiele für solche Maschinen sind Werkzeugmaschinen mit drei oder mehr beweglichen Achsen zum Positionieren eines Werkzeugs und eines Werkstücks relativ zueinander gemäß einem NC-Programm, sowie Bestückungsautomaten oder Geräte zur Bearbeitung von Wafern in der Elektronikfertigung.

Allgemein entwickelt sich der Stand der Technik zu immer höheren Anforderungen an die Genauigkeit solcher Maschinen, und damit steigen auch die Anforderungen an die Positionsmesseinrichtungen. So werden bereits Positionsmessungen im Nanometer - Bereich, der bisher den Interferometern vorbehalten war, mit auf Maßstäben beruhenden Positionsmessgeräten durchgeführt.

Die Maßstäbe solcher Positionsmessgeräte weisen üblicherweise eine periodische Teilungsspur auf, die von einem Detektor des Positionsmessgerätes abgetastet werden. Dabei werden periodische, gegeneinander phasenverschobene elektrische Signale erzeugt, aus denen in bekannter Weise eine Verschiebung nach Betrag und Richtung ermittelt werden kann.

Die US 6995840 B2 offenbart eine Positionsmesseinrichtung, bei der neben einer sehr feinen periodischen Teilungsspur weitere periodische Teilungsspuren mit zunehmend größerer Periode vorhanden sind, um schon beim Einschalten des Gerätes eine absolute Position ausgeben zu können. Die Teilungspuren mit großer Periode sind dabei mittels eines digitalen Barcodes ausgebildet, dessen regelmäßige Striche eine Dickenmodulation durchlaufen, und so makroskopisch eine Hell-/Dunkelmodulation erzeugen. In den hellsten Bereichen verschwinden die Striche des Barcodes ganz, in den dunklen Bereichen berühren sie sich gegenseitig.

Die DE 10118174 A1 offenbart eine Teilungsstruktur mit zwei periodischen, gegeneinander verschobenen magnetischen Teilungen und zusätzlichen Referenzmarken zur Bestimmung einer Absolutposition. Die Referenzmarken sind als Unterbrechung der Periodizität der Teilungsstrukturen ausgebildet.

Da neben der Verschiebung in einer Messrichtung oft auch die absolute Position der zu vermessenden Achse benötigt wird (z.B. zur Kommutierung eines Motors), setzen sich absolute Positionsmessgeräte, die sofort nach dem Einschalten eine gültige Position ausgeben können, gegenüber inkrementalen Positionsmessgeräten, die zunächst in eine Referenzlage gebracht werden müssen, immer mehr durch.

Absolute Positionsmessgeräte enthalten neben einer sehr feinen periodischen Inkrementalspur weitere Spuren, die die Bestimmung einer absoluten Position zulassen.

In der EP 1400778 A2, von der diese Anmeldung ausgeht, ist beschrieben, dass es wünschenswert ist, in die Inkrementalspur mit kleiner Periode in regelmäßigen Abständen Referenzmarkierungen zu integrieren. Hierdurch wird der Inkrementalspur mit kleiner Periode eine zweite Inkrementalspur mit einer etwas größeren Periode überlagert. Die Zuordnung einer parallel zur Inkrementalspur verlaufenden Absolutspur (der so genannte Codeanschluss) wird dadurch erheblich vereinfacht, die Empfindlichkeit des Positionsmessgerätes gegen Moire - Fehler beim Anbau wird deutlich verringert.

In der EP 1400778 A2 wird vorgeschlagen, in einer inkrementalen Teilungsstruktur aus abwechselnd hellen und dunklen Bereichen in regelmäßigen Abständen einen hellen (oder dunklen) Bereich durch einen dunklen (oder hellen) Bereich zu ersetzen, z.B. durch Schwärzung eines eigentlich transparenten Bereiches eines Durchlichtmaßstabes. Diese Unterbrechung der Periodizität der Inkrementalspur wird in jeder achten Periode vorgenommen und wird daher auch als "1 aus 8 Lücke" bezeichnet.

Eine solche Lücke wirkt auf das Inkrementalsignal wie eine periodische Verschmutzung des Maßstabes. Bei der Abtastung eines solchen Maßstabes mittels eines strukturierten Photodetektors mit zahlreichen Sensorfeldern, der viele Perioden des Maßstabes gleichzeitig erfasst, beeinträchtigt so eine regelmäßige Störung der Periodizität die Messung nicht, solange Maßstab und Detektor optimal zueinander justiert sind. Wenn jedoch z.B. die Beleuchtungsoptik keinen ideal parallelen Strahlengang liefert, oder der Photodetektor bei Kreisteilungen radial verschoben ist, dann hat das Abbild der Inkrementalspur auf dem Photodetektor nicht die gleiche Teilungsperiode wie dieser. Das Bild ist entweder zu groß oder zu klein und es entsteht von der Sensormitte bis zu den beiden Enden des Sensorfeldes in Messrichtung eine Phasenverschiebung. Diese Phasenverschiebung wird kompensiert, solange immer zu einem jeweiligen Sensor auf der einen Hälfte des Abtastfeldes ein zur Sensormitte spiegelsymmetrisch angeordneter Sensor auf der anderen Hälfte gefunden werden kann. Dann weisen nämlich diese beiden Sensoren den gleichen Betrag der Phasenverschiebung, aber ein entgegen gesetztes Vorzeichen auf. Dies ist jedoch nicht mehr der Fall, wenn eine Verschmutzung oder eben eine "1 aus 8 Lücke" durch das Sensorfeld läuft. Dann werden einzelne Sensoren abgedeckt und der Phasenwinkelfehler des dadurch nicht kompensierten Sensors wird wirksam. Bei Bildung eines Positionswertes aus den elektrischen Signalen des Photodetektors kommt es dann zu Abweichungen zwischen dem gemessenen und dem tatsächlichen Positionswert und damit zu Messungenauigkeiten.

Aufgabe der Erfindung ist es, eine Positionsmesseinrichtung anzugeben, die einen Maßstab mit integrierten Referenzmarkierungen aufweist, der auch bei nicht optimaler Justierung einer Positionsmesseinrichtung noch die Bildung genauer Positionswerte ermöglicht.

Diese Aufgaben werden gelöst durch und ein Positionsmessgerät nach Anspruch 1.

Es wird ein Maßstab für eine Positionsmesseinrichtung vorgeschlagen, der eine in Messrichtung P - periodische Teilungsspur trägt, die in regelmäßigen Abständen eine integrierte Referenzmarkierung in Form einer Unterbrechung der P - Periodizität aufweist. Der Maßstab trägt dabei quer zur Messrichtung versetzt wenigstens zwei solcher P - periodischer Teilungsspuren, deren integrierte Referenzmarkierungen in Messrichtung gegeneinander versetzt sind.

Eine Positionsmesseinrichtung, die einen solchen Maßstab verwendet, weist einen strukturierten Detektor zum Abtasten des Maßstabes zur Erzeugung elektrischer Signale zum Bilden eines Positionswertes auf. Der Detektor zur Abtastung der Teilungsspuren beinhaltet quer zur Messrichtung versetzt angeordnet mehrere Detektorspuren, die für mehrere Perioden der Teilungsspuren jeweils m Sensoren pro Periode in Messrichtung hintereinander angeordnet aufweisen.

Die Idee zur Lösung der gestellten Aufgabe besteht also darin, die in regelmäßigen Abständen angeordneten Referenzmarkierungen in quer zur Messrichtung angeordneten Teilungsspuren in Messrichtung zueinander versetzt anzuordnen. Es ergeben sich dann zwar bei der Auswertung der einzelnen Teilungsspuren Messfehler, die sich jedoch bei geeigneter Verknüpfung der beiden ermittelten Positionswerte gegenseitig aufheben. Um diesen Effekt zu verstärken, werden auch die Detektorspuren zur Abtastung der Teilungsspuren durch Weglassen bestimmter Sensoren in einem Abstand, der vom Abstand der Referenzmarkierungen unterschiedlich ist, geeignet ausgebildet.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: den Aufbau einer Positionsmesseinrichtung,
- Figur 2: einen Maßstab mit zugehörigem Detektorfeld gemäß dem Stand der Technik,
- Figur 3: einen von der Messposition abhängigen Messfehler im Stand der Technik,
- Figur 4: einen erfindungsgemäßen Maßstab mit zugehörigem Detektorfeld,
- Figur 5: eine Ausschnittsvergrößerung der Figur 4.

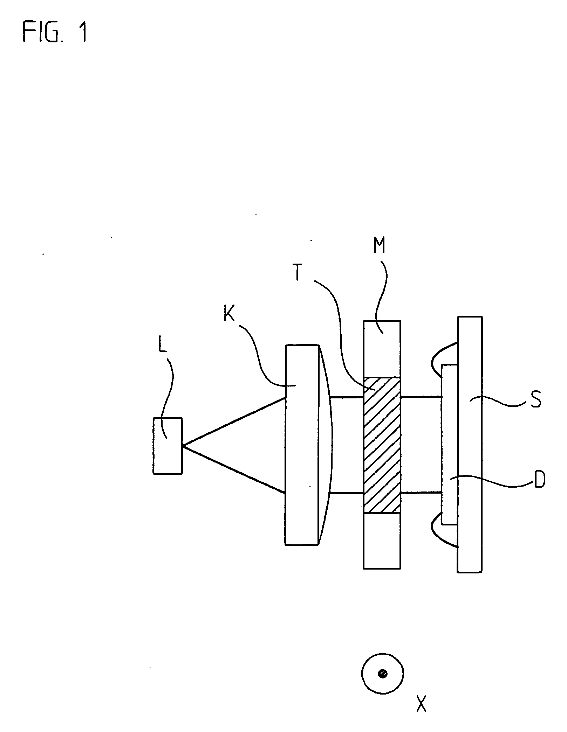

Figur 1 zeigt zunächst den prinzipiellen Aufbau einer Positionsmesseinrichtung der hier behandelten Art. Eine Lichtquelle L beleuchtet über eine Kollimatorlinse K einen Maßstab M mit parallelem Licht. Der Maßstab M trägt eine inkrementale Teilung T. Die Messrichtung X liegt senkrecht zu Zeichenebene. Das Licht fällt durch den Maßstab M und seine abwechselnd transparenten und opaken Strukturen hindurch und bildet dabei die Teilungsspur T auf einen strukturierten Detektor D mit mehreren in Messrichtung hintereinander angeordneten Sensoren bzw. Photodetektoren auf einem Substrat S ab. Bewegt sich der Maßstab M relativ zum Detektor M, so erzeugen die einzelnen Sensoren des Detektors D periodische Signale, die sich in bekannter Weise in ein Positionssignal umrechnen lassen.

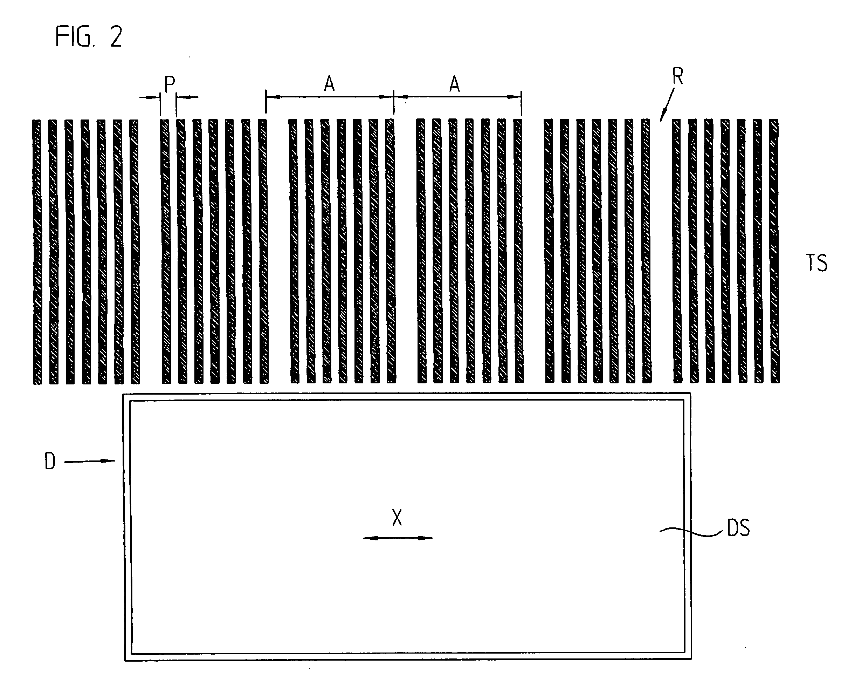

Figur 2 zeigt in der oberen Hälfte eine Draufsicht auf eine inkrementale, P - periodische Teilungsspur TS der Teilung T des Maßstabes M gemäß dem oben beschriebenen Stand der Technik. Um integrierte Referenzmarkierungen R zu erhalten, ist in regelmäßigen Abständen A von acht (n = 8) Teilungsperioden P jeweils ein opaker Bereich der Teilungsspur TS durch einen transparenten Bereich ersetzt. Die P - Periodizität der Teilungsspur TS ist damit in regelmäßigen Abständen unterbrochen.

In der unteren Hälfte der Figur 2 ist lediglich schematisch der Detektor D dargestellt, der eine Detektorspur DS mit mehreren in Messrichtung X hintereinander angeordneten Sensoren bzw. Photodetektoren zur Abtastung des Abbildes der Teilungsspur TS aufweist.

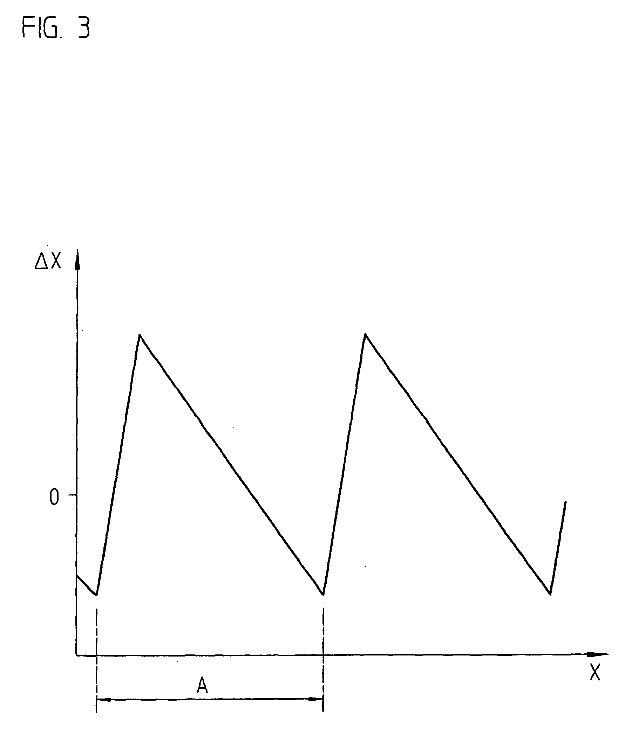

Bildet man nun in herkömmlicher Weise aus den elektrischen Signalen des Detektors P Positionswerte, so ergibt sich wie oben erklärt eine Abweichung der gemessen Position von der wahren Position, wenn Maßstab M und Detektor D nicht optimal zueinander justiert sind. In Figur 3 ist eine solche Abweichung qualitativ dargestellt. Trägt man den Messfehler, also die Abweichung ΔX vom wahren Positionswert, gegenüber der Verschiebung X des Maßstabes M relativ zum Detektor D auf, so ergibt sich eine Sägezahn-Funktion mit einer Periode, die dem Abstand A der Referenzmarkierungen entspricht. Dies ist leicht einzusehen, da ein Maßstab M, der um den Abstand A verschoben wird, genau das gleiche Lichtmuster auf den Detektor D wirft wie vor seiner Verschiebung. Der aus der nicht optimalen Abbildung des Lichtmusters resultierende Fehler nimmt dann wieder seinen Ausgangswert an, und der Verlauf der Fehlerkurve wiederholt sich beim weiteren Verschieben des Maßstabes M.

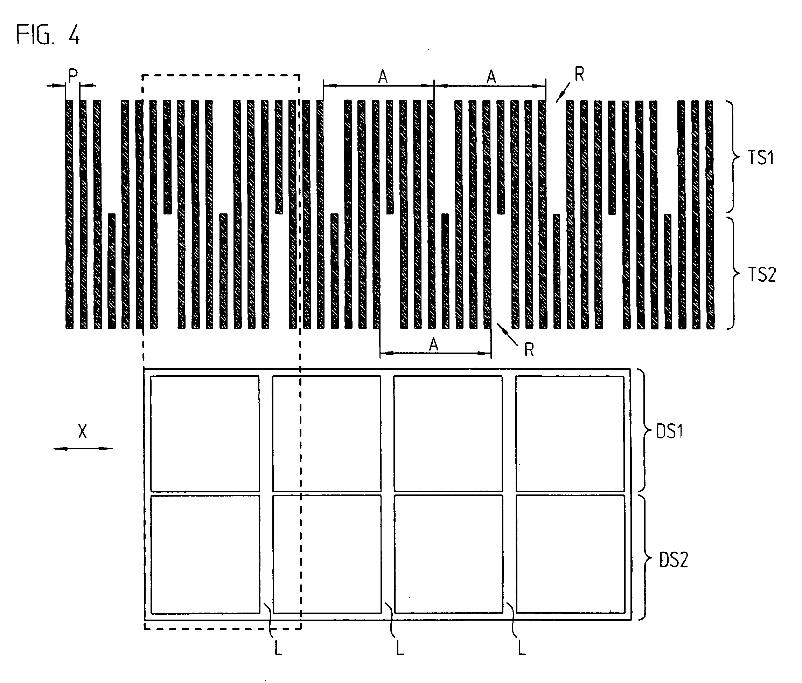

In der oberen Hälfte der Figur 4 ist ein Ausschnitt einer Teilung T eines erfindungsgemäßen Maßstabes M dargestellt. Betrachtet man die Teilung T dieses Maßstabes, so erkennt man, dass nun nach jeder vierten Periode eine Unterbrechung der P - Periodizität vorliegt, diesmal aber ist ein eigentlich opaker Bereich jeweils nur zur Hälfte durch einen transparenten Bereich ersetzt, und zwar abwechselnd die obere und die untere Hälfte. Zum besseren Verständnis der Erfindung bietet sich eine andere Betrachtungsweise an: Der Maßstab M weist nun quer (senkrecht) zur Messrichtung X versetzt zwei P - periodische Teilungsspuren TS1, TS2 auf, die in regelmäßigen Abständen A Referenzmarkierungen R tragen. Diese Referenzmarkierungen R sind aber in Messrichtung X gegeneinander versetzt, und zwar um den halben Abstand A.

Wertet man die beiden Teilungsspuren TS1, TS2 mit einem Detektor D mit zwei passend angeordneten Detektorspuren DS1, DS2 in gewohnter Weise aus, so ergeben sich Positionswerte, deren Messfehler genauso aussieht wie in Figur 3 dargestellt. Die beiden periodischen Messfehler sind aber gegeneinander um deren halbe Periode verschoben. Mittelt man daher die beiden von den Teilungsspuren TS1, TS2 erhaltenen Positionswerte, so verringert sich der Messfehler AX gegenüber dem Stand der Technik bereits deutlich.

Dieser Effekt der Verringerung des Messfehlers ΔX lässt sich noch erheblich verbessern, wenn man dafür sorgt, dass der Messfehler ΔX nicht sägezahnförmig ist wie in Figur 3 dargestellt, sondern sinusförmig, denn zwei um deren halbe Periode verschobene Sinus - Signale heben sich besonders gut auf.

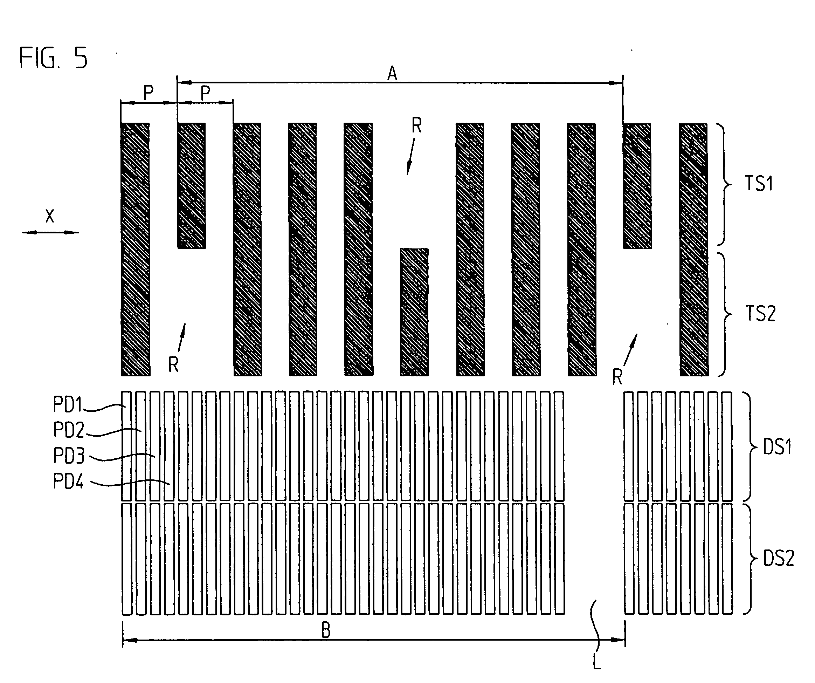

Eine hierzu dienende Modifikation der Detektorspuren DS1, DS2 ist in Figur 4 mit den Lücken L in den Detektorspuren DS1, DS2 angedeutet. In der Figur 5 ist eine quer zur Messrichtung X gestauchte Ausschnittsvergrößerung der Figur 4 gezeigt, anhand der die Details der Detektorspuren DS1, DS2 erläutert werden können.

Zunächst erkennt man, dass jede Periode P der Teilungsspuren TS1, TS2 durch vier (m = 4, andere Werte mit m>1 sind möglich) Sensoren oder Photodetektoren PD1, PD2, PD3, PD4 abgetastet wird. Jeder vierte Sensor erfasst damit idealer Weise die gleiche Phase. Alle gleichphasigen Sensoren werden elektrisch miteinander verbunden, so dass eine Detektorspur vier um 90 Grad phasenverschobene periodische Signale zur Verschiebungsdetektion liefert. Diese vier Signale werden üblicherweise zu zwei um 90 Grad phasenverschobenen Signalen verrechnet, um daraus letztlich die Verschiebung nach Betrag und Richtung zu ermitteln.

In den Figuren 4 und 5 erkenn man in den Detektorspuren DS1, DS2 Lücken L, in denen jeweils die Sensoren PD1, PD2, PD3, PD4 für eine Periode P der Teilungsspuren TS1, TS2 fehlen. Indem man die Sensoren PD1, PD2, PD3, PD4 von der Gesamtbreite einer Teilungsperiode P weglässt, erreicht man die gewünschte Verrundung des Sägezahnprofils der Figur 3. Hierzu müssen die Lücken L mit einer anderen Periode auftreten als die Referenzmarkierungen R. Liegt wie in diesem Ausführungsbeispiel in jeder achten Periode P der Teilungsspuren TS1, TS2 eine Referenzmarkierung R vor, so bietet es sich an, eine Lücke L in jeder 9. Periode P der Detektorspuren vorzusehen. Der Abstand A der Referenzmarkierungen R und der Abstand B der Lücken unterscheidet sich dann gerade um eine Periode P.

Die Lücken L der Detektorspuren DS1, DS2 müssen nicht notwendiger Weise physikalisch auf dem Detektor D vorhanden sein. Es genügt, wenn die entsprechenden Sensoren nicht elektrisch angeschlossen sind, oder wenn deren Signale schlicht nicht zur Positionswertbildung herangezogen werden. Die Lücken L unterscheiden sich insofern von den Referenzmarkierungen R, die als sichtbare Abweichung von der P-Periodizität der Teilungsspuren TS1, TS2 vorliegen müssen.

Im Vergleich zu den in Messrichtung X gegeneinander versetzten Referenzmarkierungen R liegen die Lücken L der Detektorspuren DS1, DS2 in Messrichtung X nebeneinander.

Zur zuverlässigen Erfassung und Auswertung der Referenzmarkierungen R werden jeweils Sensoren PD1 - PD4 aus den beiden Detektorspuren DS1, DS2 miteinander verbunden, die um vier Perioden P in Messrichtung gegeneinander versetzt sind. Das Ausgangssignal einer solchen Anordnung entspricht dann dem Stand der Technik und kann entsprechend ausgewertet werden. Zur Bildung des (möglichst fehlerfreien) Positionswertes werden aber die Inkrementalsignale von jeweils in Messrichtung X nebeneinander liegenden Sensoren PD1 - PD4 herangezogen.

Anhand der Figur 4 in Verbindung mit der Figur 5 erkennt man, dass eine Detektorspur DS1, DS2 z.B. drei Lücken L aufweisen kann, die jeweils auf beiden Seiten von 32 (n * m = 8 * 4) Sensoren PD1 - PD4 eingefasst sind. Diese jeweils 32 Sensoren PD1 - PD4 decken dabei jeweils acht (n = 8) Perioden der Teilungsspuren TS1, TS2 ab, so dass insgesamt 135 Perioden P der Teilungsspuren TS1, TS2 von den Detektorspuren DS1, DS2 abgedeckt sind, wobei wegen der drei Lücken L nur 132 Perioden P gleichzeitig ausgewertet werden.

Der Maßstab M mit seinen Teilungsspuren TS1, TS2 kann im Übrigen erheblich länger sein als in den Figuren dargestellt.

In der Figur 5 sind die Photodetektoren PD1 - PD4 rechteckig gezeichnet. Zur Filterung von unerwünschten Oberwellen können diese Photodetektoren aber auch andere Formen haben, wie sie in der DE 10319609 A1 beschrieben sind. Insbesondere können benachbart angeordnete Photodetektoren PD1 - PD4 so angeordnet sein, dass eine gemeinsame Berührlinie mit der Messrichtung X einen Winkel ungleich 90 Grad einschließen, und/oder es können Photodetektoren PD1 - PD4 im Bereich von deren Längsenden bogenförmige Begrenzungslinien aufweisen. Es sei hierzu insbesondere auf die Figur 2 der DE 10319609 A1 verwiesen. Die Photodetektoren 34.1 - 34.4 dieser Figur 2 entsprechen den Photodetektoren PD1 - PD4 der vorliegenden Figur 5.

Der Maßstab M kann ein Durchlichtmaßstab mit transparenten und opaken Bereichen sein, oder ein Auflichtmaßstab mit reflektierenden und absorbierenden Bereichen. In beiden Fällen sind die Sensoren PD1 - PD4 der Detektorspuren DS1, DS2 Photodetektoren.

In den Figuren wurde aus Gründen der besseren Darstellbarkeit eine Referenzmarkierung R durch Ersetzen eines dunklen Bereichs durch einen hellen Bereich erzeugt. Bevorzugt ist aber der umgekehrte Fall, nämlich das Ersetzen eines hellen Bereichs durch einen dunklen Bereich. Zusätzliche dunkle Bereiche reduzieren lediglich das zur Verfügung stehende Signal um ein Achtel (für n=8), zusätzliche helle Bereiche erzeugen außerdem zusätzliches Streulicht und verschlechtern damit den Modulationsgrad und damit die Signalqualität.

Neben auf optischer Abtastung beruhenden Positionsmesseinrichtungen sind natürlich auch andere auf der Abtastung von periodischen Maßstäben beruhende Systeme möglich, z.B. mit kapazitiven, induktiven oder magnetischen Teilungsstrukturen und entsprechenden Sensoren zu deren Abtastung.

Maßstäbe mit (wie im Ausführungsbeispiel beschrieben ) zwei oder mehr quer zur Messrichtung X versetzten Teilungsspuren sind möglich. Entsprechend viele Detektorspuren sind nötig. Die Auslöschung von Messfehlern innerhalb einer Spur durch Auswertung mehrerer Spuren kann so evtl. noch etwas besser gelingen. Es ist allerdings ein Abwägen von zusätzlichem Aufwand und erzielbarem Nutzen notwendig.

Das Grundprinzip eines erfindungsgemäßen Maßstabes bzw. einer erfindungsgemäßen Positionsmesseinrichtung ist das Verschieben der Referenzmarkierungen in den quer zur Messrichtung versetzten Teilungsspuren um Bruchteile des Abstandes der Referenzmarkierungen innerhalb einer Teilungsspur. Es wird so eine Möglichkeit geschaffen, die negativen Auswirkungen der Störung der Periodizität einer Teilungsspur durch die Referenzmarkierungen zu eliminieren oder zumindest deutlich zu reduzieren.

## Patentansprüche

1. Positionsmesseinrichtung mit einem Maßstab (M), der eine in Messrichtung (X) P - periodische Teilungsspur (TS1, TS2) trägt, die in regelmäßigen Abständen (A) eine integrierte Referenzmarkierung (R) in Form einer Unterbrechung der P-Periodizität aufweist, sowie mit einem strukturierten Detektor (D) zum Abtasten des Maßstabes (M) zur Erzeugung elektrischer Signale zum Bilden eines Positionswertes, **dadurch gekennzeichnet, dass** der Maßstab (M) quer zur Messrichtung (X) versetzt wenigstens zwei solcher Teilungsspuren (TS1, TS2) mit gleicher Periode (P) trägt, deren integrierte Referenzmarkierungen (R) in Messrichtung gegeneinander versetzt sind, und dass auf dem Detektor (D) zur Abtastung der Teilungsspuren (TS1, TS2) mehrere Detektorspuren (DS1, DS2) quer zur Messrichtung (X) versetzt angeordnet sind, die für mehrere Perioden (P) der Teilungsspuren (TS1, TS2) jeweils m Sensoren (PD1 - PD4) pro Periode (P) in Messrichtung (X), mit m>1, hintereinander angeordnet aufweisen.

2. Positionsmesseinrichtung nach Anspruch 1, **dadurch gekennzeichnet, dass** der Maßstab (M) quer zur Messrichtung (X) zwei P - periodische Teilungsspuren (TS1, TS2) trägt, deren in regelmäßigen Abständen (A) angeordnete Referenzmarkierungen (R) um den halben Abstand (A) in Messrichtung (X) gegeneinander versetzt sind.

3. Positionsmesseinrichtung nach Anspruch 1 oder 2, **dadurch gekennzeichnet, dass** die Teilungsspuren (TS1, TS2) aus in Messrichtung (X) abwechselnd hellen und dunklen Bereichen bestehen, so dass eine Periode (P) durch einen hellen und einen dunklen Bereich gebildet ist, wobei in jeder Teilungsspur (TS1, TS2) jeweils der n-te helle oder dunkle Bereich durch einen dunklen bzw. hellen Bereich ersetzt ist, wodurch eine in regelmäßigen Abständen (A, n*P) angeordnete integrierte Referenzmarkierung (R) gebildet ist.

4. Positionsmesseinrichtung nach Anspruch 3, **dadurch gekennzeichnet, dass** n = 8 ist und damit der Abstand (A) der achtfachen Periode P entspricht.

5. Positionsmesseinrichtung nach einem der vorhergehenden Ansprüche, **dadurch gekennzeichnet, dass** jede Detektorspur (DS1, DS2) jeweils in einem vom Abstand (A) der Referenzmarkierungen (R) verschiedenen zweiten Abstand (B) eine Lücke (L) aufweist, in der jeweils m Detektoren (PD1 - PD4) fehlen oder nicht zum Erzeugen der elektrischen Signale herangezogen werden.

6. Positionsmesseinrichtung nach Anspruch 5, **dadurch gekennzeichnet, dass** sich der Abstand (A) der Referenzmarkierungen (R) und der zweite Abstand (B) der Lücken (L) um eine Periode (P) unterscheiden.

7. Positionsmesseinrichtung nach Anspruch 5 oder 6, **dadurch gekennzeichnet, dass** die Lücken (L) der Detektorspuren (DS1, DS2) in Messrichtung (X) nebeneinander liegen.

8. Positionsmesseinrichtung nach einem der vorhergehenden Ansprüche, **dadurch gekennzeichnet, dass** die Sensoren (PD1 - PD4) Photodetektoren sind, von denen je vier in Messrichtung (X) hintereinander angeordnet eine Periode (P) einer Teilungsspur (TS1, TS2) abtasten.

9. Positionsmesseinrichtung nach einem der vorhergehenden Ansprüche, **dadurch gekennzeichnet, dass** Licht einer Lichtquelle (L) kollimiert durch den Maßstab (M) auf den strukturierten Detektor (D) fällt.

10. Positionsmesseinrichtung nach Anspruch 9, bei dem zur Detektion der periodischen Teilungsspuren (TS1, TS2) jeweils in Messrichtung (X) nebeneinander liegende Photodetektoren (PD1, PD2, PD3, PD4) miteinander verschaltet sind, und zur Detektion der integrierten Referenzmarkierungen (R) in Messrichtung (X) gegeneinander versetzte Photodetektoren (PD1, PD2, PD3, PD4) miteinander verschaltet sind, wobei der Versatz dem Versatz der integrierten Referenzmarkierungen (R) zwischen den Teilungsspuren (TS1, TS2) entspricht.

## Claims

1. Position measuring device comprising a scale (M) which bears a graduation track (TS1, TS2) which is P-periodic in the measuring direction (X) and which has at regular spacings (A) an integrated reference mark (R) in the form of an interruption of the P-periodicity, and comprising a structured detector (D) for scanning the scale (M) in order to generate electric signals for forming a position value, **characterized in that** in a fashion offset transverse to the measuring direction (X) the scale (M) bears at least two such graduation tracks (TS1, TS2) of the same period (P), the integrated reference marks (R) of which are offset from one another in the measuring direction, and **in that** arranged offset transverse to the measuring direction (X) on the detector (D) for the purpose of scanning the graduation tracks (TS1, TS2) are a plurality of detector tracks (DS1, DS2) which, for a plurality of periods (P) of the graduation tracks (TS1, TS2) respectively have m sensors (PD1 - PD4) per period (P) arranged one behind another in the measuring direction (X), with m > 1.

2. Position measuring device according to Claim 1, **characterized in that** in a fashion transverse to the measuring direction (X) the scale (M) bears two P-periodic graduation tracks (TS1, TS2) of which reference marks (R) arranged at regular spacings (A) are offset from one another by half the spacing (A) in the measuring direction (X).

3. Position measuring device according to Claim 1 or 2, **characterized in that** the graduation tracks (TS1, TS2) comprise alternately bright and dark regions in the measuring direction (X) such that a period (P) is formed by a bright and a dark region, the nth bright or dark region being replaced in each graduation track (TS1, TS2) by a dark or bright region, the result being the formation of an integrated reference mark (R) arranged at regular spacings (A, n*P).

4. Position measuring device according to Claim 3, **characterized in that** n = 8 and the spacing (A) therefore corresponds to the eight-fold period P.

5. Position measuring device according to one of the preceding claims, **characterized in that** at a different, second spacing (B) from the spacing (A) of the reference marks (R) each detector track (DS1, DS2) respectively has a gap (L) in which m detectors (PD1 - PD4) are respectively absent or are not used to generate electric signals.

6. Position measuring device according to Claim 5, **characterized in that** the spacing (A) of the reference marks (R) and the second spacing (B) of the gaps (L) differ from one another by a period (P).

7. Position measuring device according to Claim 5 or 6, **characterized in that** the gaps (L) of the detector tracks (DS1, DS2) lie next to one another in the measuring direction (X).

8. Position measuring device according to one of the preceding claims, **characterized in that** the sensors (PD1 - PD4) are photodetectors of which four each arranged one behind another in the measuring direction (X) scan a period (P) of a graduation track (TS1, TS2).

9. Position measuring device according to one of the preceding claims, **characterized in that** light from a light source (L) falls onto the structured detector (D) in a fashion collimated by the scale (M).

10. Position measuring device according to Claim 9, in which in order to detect the periodic graduation tracks (TS1, TS2) photodetectors (PD1, PD2, PD3, PD4) respectively lying next to one another in the measuring direction (X) are connected to one another, and in order to detect the integrated reference marks (R) photodetectors (PD1, PD2, PD3, PD4) offset from one another in the measuring direction (X) are connected to one another, the offset corresponding to the offset of the integrated reference marks (R) between the graduation tracks (TS1, TS2).

## Revendications

1. Dispositif de mesure de position comportant une échelle (M) portant une piste graduée (TS1, TS2) périodique de période P dans la direction de mesure (X), qui comprend un marquage de référence (R) intégré à des intervalles réguliers (A) sous la forme d'une discontinuité de la périodicité P, et comportant également un détecteur structuré (D) pour balayer l'échelle (M) afin de générer des signaux électriques destinés à créer une valeur de position, **caractérisé en ce que** l'échelle (M) porte au moins deux telles pistes graduées (TS1, TS2) de même période (P) décalées perpendiculairement à la direction de mesure (X), dont des marquages de référence intégrés (R) sont décalées en quinconce dans la direction de mesure, et **en ce qu'**une pluralité de pistes de détection (DS1, DS2) sont disposées de manière décalée perpendiculairement à la direction de mesure (X) sur le détecteur (D) pour balayer les pistes graduées (TS1, TS2), lesquelles pistes comprennent respectivement m capteurs (PD1 - PD4), avec m > 1, par période (P), agencés l'un après l'autre dans la direction de mesure (X) pour une pluralité de périodes (P) des pistes graduées (TS1, TS2).

2. Dispositif de mesure de position selon la revendication 1, **caractérisé en ce que** l'échelle (M) porte perpendiculairement à la direction de mesure (X) deux pistes graduées (TS1, TS2) périodiques de période P dont les marquages de référence (R) disposés à des intervalles (A) réguliers sont décalés en quiconque de la moitié de l'intervalle (A) dans la direction de mesure (X).

3. Dispositif de mesure de position selon la revendication 1 ou 2, **caractérisé en ce que** les pistes graduées (TS1, TS2) sont constituée de zones claires et foncées alternant dans la direction de mesure (X) de manière à ce qu'une période (P) soit formée d'une zone claire et d'une zone foncée, dans lequel, dans chaque piste graduée (TS1, TS2), la n-ème zone claire ou foncée est respectivement remplacée par une zone foncée ou claire, cela conduisant à créer un marquage de référence intégré (R) disposé à des intervalles réguliers (A, n*P).

4. Dispositif de mesure de position selon la revendication 3, **caractérisé en ce que** n = 8 et par conséquent **en ce que** l'intervalle (A) correspond à huit fois la période P.

5. Dispositif de mesure de position selon l'une quelconque des revendications précédentes, **caractérisé en ce que** chaque piste de détection (DS1, DS2) comprend un interstice (L) respectif à un second intervalle (B) différent du l'intervalle (A) des marquages de référence (R), dans lequel m détecteurs (PD1 - PD4) respectifs sont ou non absents et sont utilisés pour générer les signaux électriques.

6. Dispositif de mesure de position selon la revendication 5, **caractérisé en ce que** l'intervalle (A) des marquages de référence (R) et le second intervalle (B) des interstices (L) diffèrent d'une période (P).

7. Dispositif de mesure de position selon la revendication 5 ou 6, **caractérisé en ce que** les interstices (L) des pistes de détection (DS1, DS2) sont disposés côte à côte dans la direction de mesure (X).

8. Dispositif de mesure de position selon l'une quelconque des revendications précédentes, **caractérisé en ce que** les capteurs (PD1 - PD4) sont des photodétecteurs dont quatre, qui sont agencés l'un après l'autre dans la direction de mesure (X), balayent une période (P) d'une piste graduée (TS1, TS2).

9. Dispositif de mesure de position selon l'une quelconque des revendications précédentes, **caractérisé en ce que** de la lumière d'une source de lumière (L) est incidente de manière collimatée à travers l'échelle (M) sur le détecteur structuré (D).

10. Dispositif de mesure de position selon la revendication 9, dans lequel des photodétecteurs (PD1, PD2, PD3, PD4) situés côte à côte dans la direction de mesure (X) sont respectivement connectés les uns aux autres pour détecter les pistes graduées périodiques (TS1, TS2) et des photodétecteurs (PD1, PD2, PD3, PD4) décalés les uns par rapport aux autres dans la direction de mesure (X) sont connectés les uns aux autres pour détecter les marquages de référence intégrés (R), dans lequel le décalage correspond au décalage des marquages de référence intégrés (R) entre les pistes graduées (TS1, TS2).
